# EUROPEAN PATENT APPLICATION

(11) **EP 1 128 673 A2**
(43) Date of publication of application: **29.08.2001**
(21) Application number: 01200291.1
(22) Date of filing: 29.01.2001
(51) Int. Cl.: H04N 5/926

(54) **Video apparatus, notably video recorders, and processes for use in said video apparatus**

(30) Priority: 23.02.2000 EP 00400493; 23.02.2000 EP 00400492
(71) Applicant: THOMSON multimedia, 92100 Boulogne Billancourt (FR)
(72) Inventor: Chin, Yuan Fuat, 92100 Boulogne Billancourt (FR); Dumont, Frank, 92100 Boulogne Billancourt (FR); Tan, Chee Lam, 92100 Boulogne Billancourt (FR); Ziolkowski, Andrzej, 92100 Boulogne Billancourt (FR)
(74) Representative: Bonnans, Arnaud

(57) **Abstract**

A video apparatus has a first circuit (for instance an analog recording and reproducing unit 14) generating a first baseband analog video signal on a first output.

A second circuit (for instance a video decoder 28), at least connectable (for instance through a path switch 22) to the first output, can digitise the first baseband analog video signal and process and output a corresponding digital stream on a second output.

The second output is in turn at least connectable (for instance through a digital switch 38) to a third circuit (for instance a video encoder 36) generating on a third output a second baseband analog video signal on the basis of the digital stream.

Processes to take advantage of this structure are proposed.

## Description

The invention relates to video apparatus, notably video recorders, and to processes for use in said video apparatus.

A video apparatus is an apparatus with circuits for processing a video signal. Among such apparatus, video recorders are apparatus for recording a video signal on a medium.

A known solution for a video recorder, disclosed for instance in U.S. patent No. 5 504 632 and European patent application No. 0 671 855, has the general structure represented in figure 1. A video signal (for instance CVBS) from an analog source 2 is transmitted to both an analog recording and reproducing unit 4 and a digital recording and reproducing unit 6.

The analog recording and reproducing unit 4 can record the video signal from the analog source 2 on a tape according to a given analog standard, i.e. without digitisation, for instance according to the VHS or S-VHS format.

The digital recording and reproducing unit 6 can record the video signal from the analog source 2 on the tape according to a given digital standard, for instance D-VHS. The digital recording and reproducing unit 6 generally comprises an analog-to-digital converter to digitise the analog signal from the analog source 2 and some means to convert the digitised signal into a bit stream to be recorded on the tape.

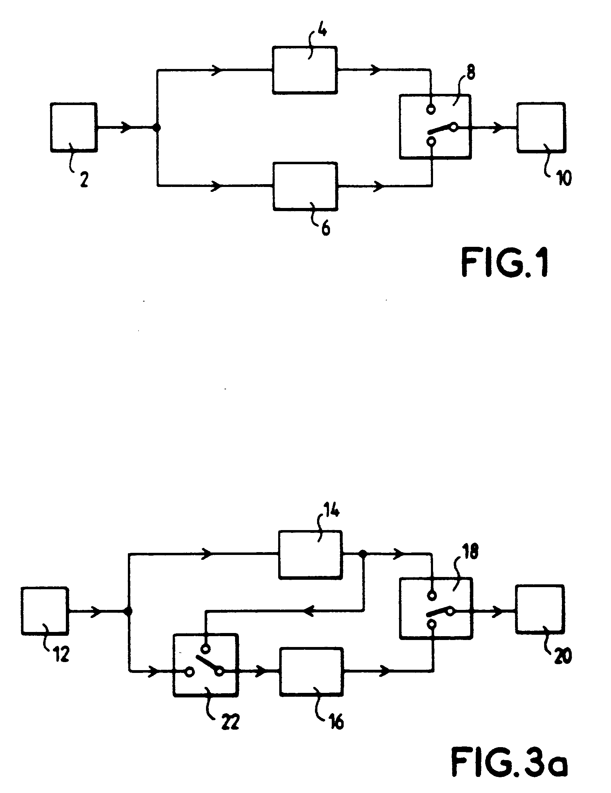

The VCR also comprises a micro-processor (not shown on figure 1) through which the user can select which one of the two units 4,6 he wants to use in the recording mode (choice between analog and digital recording). The VCR also comprises detection means (not shown) to detect the type of signal on a recorded tape in order to select the analog recording and reproducing unit 4 or the digital recording and reproducing unit 6 during reproduction of the recorded tape. A solution for such detection means is for instance described in European patent application No. 0 671 855.

Depending on the output of the detection means, the micro-processor will control a monitor switch 8 in order to connect a display 10 (where the recorded video signal is to be watched) to the analog recording and reproducing unit 4 or to the digital recording and reproducing unit 6.

The possibilities when using such a video apparatus are limited, as digitisation of the analog signal is only used when recording said analog signal according to a digital standard like D-VHS.

The invention aims at enlarging the use of the circuit realising digitisation in order to take fully advantage of its presence in the video apparatus.

In this goal, it is proposed a video apparatus comprising :
- a first circuit generating a first baseband analog video signal on a first output;
- a second circuit, at least connectable to the first output, for digitising the first baseband analog video signal and for processing and outputing a corresponding digital stream on a second output;
wherein the second output is at least connectable to a third circuit generating on a third output a second baseband analog video signal on the basis of the digital stream.

The expression "at least connectable" means connectable or connected.

The invention also proposes the following features :
- a multiplexer is interposed between the second circuit and the third circuit to allow direct connection between the second circuit and the third circuit;
- the multiplexer is connected to a digital source and to a medium interface and allows to connect independently the third circuit and the medium interface to the second circuit and the digital source ;
- the multiplexer comprises a first switch with an input connected to the second circuit, an input connected to the digital source and an output connected to the medium interface, and a second switch with an input connected to the second circuit, an input connected to the digital source, an input connected to the medium interface and an output connected to the third circuit;
- an input of the first switch and an input of the second switch is connected to a digital video source via a transcoder;
- the first circuit is an analog recording and reproducing unit;
- the second circuit and the third circuit are part of a digital recording and reproducing unit and a path switch allows to connect selectively the second circuit to the analog recording and reproducing unit or to an analog source ;
- a digital switch allows direct connection between the second circuit and the third circuit;
- the second circuit is a video decoder and the third circuit is a video encoder;
- the second circuit is a video decoder in series with a MPEG encoder and the third circuit is a MPEG decoder in series with a video encoder;
- the third output is connectable to an input of an analog recording and reproducing unit;
- the second circuit and the third circuit are part of a digital recording and reproducing unit and a path switch selectively connects the third output or the first output to the input of the analog recording and reproducing unit;
- a switch allows direct connection of the second circuit to the third circuit;
- the first analog video signal is a CVBS signal, the third analog video signal is a S-Video signal and the analog recording and reproducing unit is a S-VHS analog unit;
- a first path switch and a second path switch selectively connect the third output or a S-Video connector to the input of the S-VHS analog unit.

The invention also proposes the following processes for use video apparatus :
- a process for the reproduction of a video signal recorded on a tape according to an analog standard, including the step of processing the video signal through the digital unit;
- a process for recording a video signal on a tape according to an analog standard, including the step of processing the video signal through the digital unit;
- a process, including the step of reading signal processing parameters in a memory of the video recorder which content can be changed by the user;
- a process for controlling a micro-processor of a video apparatus, wherein the first baseband analog video signal is realised according to a first norm, comprising the steps of:

- instructing said third circuit to generate the second baseband analog video signal according to a second norm which is different from said first norm ;
- a process for controlling a micro-processor of a video apparatus, comprising the steps of:
   - instructing an on-screen display processor to display a menu ;
   - waiting for an information from the user;
   - storing said information in a memory ;
   - transmitting said information to the second circuit or to the third circuit as a parameter for signal processing ;
- a process for controlling a micro-processor of a video apparatus, comprising the steps of:
   - instructing an on-screen display processor to display a menu ;
   - waiting for an information from the user;
   - storing said information in a memory ;
   - controlling the path switch depending on said information.

The invention also proposes a video cassette recorder with :
- an analog recording and reproducing unit having an output for a first baseband analog video signal;
- a digital recording and reproducing unit having an input for a second baseband analog video signal and digital processing means generating on an output of said digital unit a third baseband analog video signal;
- a path switch allowing connection of the output of the analog unit to the input of the digital unit;
and a process for controlling the video cassette recorder including the step of:
- instructing the digital processing means to generate a still picture.

It is also proposed that the process includes the successive steps of:
- instructing the digital processing means to generate a still picture ;
- instructing the drum unit to stop the tape motion.

Further interesting features are the following :
- the video cassette recorder comprises a micro-processor and the step of instructing the digital processing means to generate a still picture takes place immediately when a pause signal is received by the micro-processor;
- the video cassette recorder further comprises a monitor switch to selectively connect the output of the analog unit or the output of the digital unit to an output of the monitor switch connectable to a display, and the process further includes the step of instructing the monitor switch to connect the output of the digital unit to the output of the monitor switch when a pause signal is received by the micro-processor;
- the video cassette recorder comprises a micro-processor, the digital processing means comprises a video encoder and the step of instructing the digital processing means to generate a still picture is realised by an instruction from the micro-processor to the video encoder;
- the video cassette recorder comprises a micro-processor, the digital processing means comprises a MPEG decoder and the step of instructing the digital processing means to generate a still picture is realised by an instruction from the micro-processor to the MPEG decoder;
- the video cassette recorder comprises a micro-processor and a monitor switch to selectively connect the output of the analog unit or the output of the digital unit to an output of the monitor switch connectable to a display and the process includes the step of instructing the monitor switch to connect the output of the analog unit to the output of the monitor switch when a search signal is received by the micro-processor.

These features allow to obtain an image with full resolution when a video reproduction of a tape recorded according to an analog interlaced format (VHS or S-VHS) is paused and not to jeopardise the quality of other trick modes (forward search, backward search).

Embodiments of the invention will now be described with reference to the attached figures, where :
- figure 1 is the general structure of the signal processing in a video apparatus of the prior art, as already explained ;
- figure 2a represents a first embodiment of the invention ;
- figure 2b is a detailed representation of the multiplexer of figure 2a ;
- figure 2c represents a variation of the first embodiment;
- figure 2d represents an additional possibility for the solution of figure 2c ;
- figure 3a represents a second embodiment of the invention ;
- figure 3b represents the second embodiment with further details ;
- figure 4a represents a variation of the second embodiment;
- figure 4b represents a first screen allowing the user to input his instructions ;
- figure 4c represents a second screen allowing the user to input his instructions ;
- figure 4d represents the main elements allowing the user's instructions to be entered and implemented ;
- figure 5 represents some elements of the second embodiment;
- figure 6a represents a tape recorded according to the VHS standard ;
- figure 6b represents schematically a first half of an image read from a VHS tape ;
- figure 6c represents schematically the second half of the image of figure 6b ;
- figure 6d represents schematically the image of figure 6b ;
- figure 6e represents the image of figure 6b in pause mode in a conventional analog VCR ;
- figure 6f represents schematically the image of figure 6b in pause mode in a VCR according to the invention ;
- figure 7 represents a third embodiment of the invention ;
- figure 8 describes a specific application of the third embodiment;
- figure 9 represents a fourth embodiment of the invention.

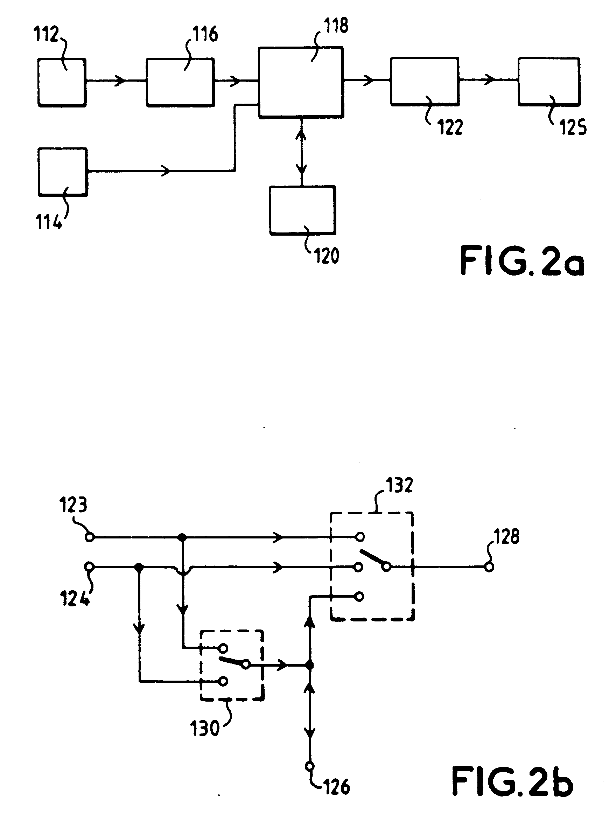

A first embodiment of the invention is represented at figure 2a.

A digital video recorder whose main elements are represented on figure 2a comprises an analog source 112 and a digital source 114. The analog source 112 is generally an analog tuner receiving analog video signals from a remote emitter through an antenna combined with a demodulator. The analog source 112 could also be for instance the output of a conventional analog VCR. The analog source 112 generates a baseband analog video signal.

The digital source 114 can be a digital tuner receiving from an antenna or a cable-link a video signal which is digitally coded for transmission, for instance according to the MPEG-II format. This kind of digitally coded signals (or digital streams) is already widely used for video signals received from satellites and should become used in the coming years even for terrestrial communications (new HDTV standards). Another example of a digital source 114 is a hard-disk drive (HDD).

A digital encoder 116 receives the analog signal from the analog source 112 and outputs a digital stream, for instance coded according to the MPEG-II format. The main steps which are achieved by the digital encoder 116 are converting the analog signal into a digital signal (notably through sampling of the analog signal), processing the digital signal (notably separating of luminance and chrominance and then chrominance components, which are generally mixed together in the analog signal, to obtain a so-called YUV signal) and coding (and possibly compressing) the digital signal according to a given format.

The digital streams from the digital source 114 and from the digital encoder 116 are coded according to the same format, which may be for instance the widely-used MPEG-II format. The digital encoder 116 on the one hand and the digital source 114 on the other hand are connected to two distinct inputs of a multiplexer 118.

The multiplexer 118 is also connected via a bi-directional link to a medium interface 120. The medium interface 120 is able to convert the coded digital stream into a bit stream to record it on a medium. For instance, in a digital VCR, the medium interface 120 comprises a drum carrying magnetic heads in order to record the bit stream on a magnetic tape according to the D-VHS format. In the reverse way, the medium interface 120 can read a bit stream from the pre-recorded medium and convert it into a digital stream coded according to a specific format, like MPEG-II, and output the digital stream on the bi-directional link.

An output of the multiplexer 118 is connected to a digital decoder 122. The digital decoder 122 is able to convert a coded digital stream (for instance a MPEG-II stream) into an analog signal to be displayed on a display 125. The main steps of this conversion are decoding the coded digital stream (e.g. MPEG-II) into a non-coded (and hence non-compressed) digital signal (e.g. a YUV signal) and then generating an analog signal (digital-to-analog conversion). The analog signal output from the digital decoder 122 can be for instance of the CVBS-type, of the S-Video type or of the RGB-type and is sent to a display 125, for instance a television set.

The multiplexer 118 whose constitution will be detailed below allows to record and display independently any of the video signals from the analog source 112 and the digital source 114. Of course, it also allows to display a pre-recorded video signal.

As can be seen from figure 2b and as already explained, the multiplexer 118 has two separate inputs 123, 124 for receiving each a coded digital video stream. The input 123 is connected to the output of the digital encoder 116 and the input 124 is connected to the output of the digital source 114. The multiplexer 118 has an output 128 connected to the digital decoder 122. The multiplexer 118 is also connected at point 126 to the medium interface 120 via the bi-directional link.

The multiplexer 118 comprises a first switch 130 and a second switch 132. The first switch 130 allows to selectively link point 126 to input 123 or to input 124. The first switch 130 consequently allows to choose which video signal (among video signal from the analog source 112 and video signal from the digital source 114) should be sent to the medium interface 120 for recording.

The second switch 132 allows to selectively connect output 128 to input 123, to input 124 or to point 126. The second switch 132 thus allows to choose which video signal is to be decoded in decoder 122 and displayed on display 125 among video signal from the analog source 112 (input 123) and video signal from the digital source 114 (input 124), independently of the possible recording of one of these signals. The second switch 132 also allows to display a pre-recorded signal read from the medium interface 120 during play-back (point 126).

An example of how the structure described above can be used will now be given.

If the user wants to record the video signal from the analog source 112, the first switch 130 will connect the input 123 to point 126. The analog signal from the analog source 112 will be digitally coded (and compressed) by the digital encoder 116 and then transmitted to the medium interface 120 for recording on the medium via input 123, switch 130 and point 126.

The user will then be able to choose to watch the video signal from analog source 112 which is recorded at the same time or to watch the video signal from digital source 114 (while the video signal from the analog source 112 is digitally recorded as explained above). If he chooses to watch the video signal from digital source 114, the second switch 132 will connect output 128 to input 124. The video signal from digital source 114 will thus be sent to the display 125 through the digital decoder 122.

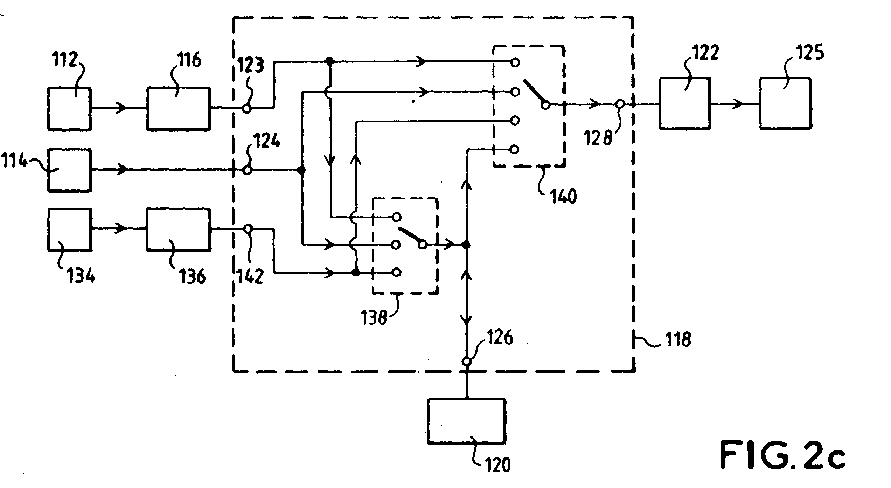

A variation of the first embodiment is represented on figure 2c. The elements of this variation which are identical to those of the first embodiment (figures 2a and 2b) will have the same reference number and will not be described once again.

The solution of figure 2c uses another source 134, here a digital video source, which is for instance a digital camcorder according to the DV standard, linked via a IEEE 1394 link. The video recorder comprises a transcoder 136 which allows to convert the digital signal from the digital video source 134 (DV standard) into a digital stream using the same standard as the digital source 114 and the encoder 116, typically MPEG-II.

The multiplexer 118 has an input 142 connected to the transcoder 136. The multiplexer 118 comprises a first switch 138, similar to the switch 130 of figure 2b with one more input connected to the transcoder 136 via input 142, and a second switch 140, similar to switch 132 of figure 2b with one more input connected to the transcoder 136 via input 142.

The video recorder of figure 2c operates similarly to the video recorder of figure 2b, with the possibility to choose among 3 sources instead of 2, and still to record one source and to watch another one on the display 125.

The solution of the invention is thus very flexible as it applies to any number of sources as far as the number of inputs of switches 130, 132 is adapted and provided every source is converted into a common digital stream standard.

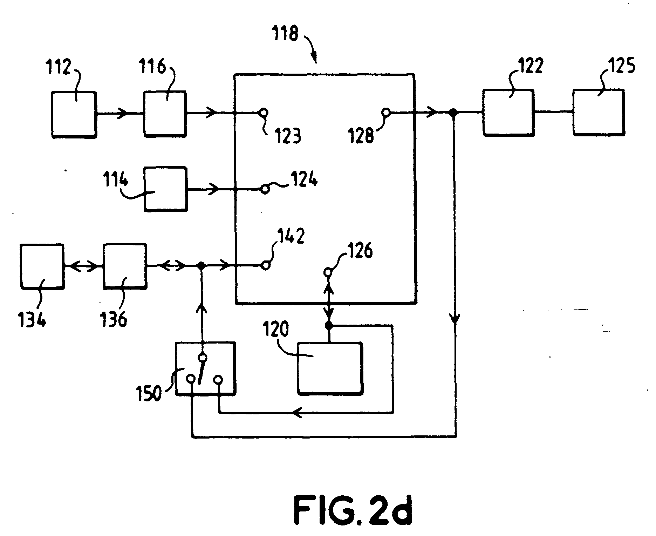

An additional possibility is represented at figure 2d. Compared to the solution of figure 2c, point 126 and output 128 are connected to two respective inputs of a record switch 150. The record switch 150 has an output connected to the transcoder 136, for instance via a bi-directional link also used for connection with point 142.

The record switch 150 allows to select which video signal is to be recorded on the digital video source 134 (when recording is possible, as with a camcorder), either video signal from the medium interface 120 (video signal reproduced from a tape) or video signal sent for display (analog source or digital source). Thanks to the provision of the record switch 150, the preceding advantages are maintained, even when recording on the digital video source 134.

A second embodiment of the invention is represented at figure 3a.

In this embodiment, a Video Cassette Recorder (VCR) comprises two main processing parts : an analog recording and reproducing unit 14 (in short analog unit) and a digital recording and reproducing unit 16 (in short digital unit), which will be described with further details below.

An analog source 12 (for instance a tuner and a demodulator) generates a baseband composite video signal (CVBS), which is an analog signal. The video signal from the source 12 is transmitted to the analog unit 14 on the one hand and to a switch 22 (called path switch from now on) on the other hand. In a first position, the path switch 22 allows connection of the analog source 12 to the input of the digital unit 16 in order to record digitally the analog signal from the analog source 12.

The output of the digital unit 16 and the output of the analog unit 14 are both connected to a monitor switch 18 in order to select which one of the signals from the digital unit 16 and from the analog unit 14 will be sent to the display 20 for watching.

The output of the analog unit 14 is also linked to the path switch 22, which allows to connect the output of the analog unit 14 to the input of the digital unit 16. Hence, when playing back (*i*. *e*. reproducing) an analog recorded tape (VHS format), the user can choose between the two following possibilities :
- connecting, thanks to the monitor switch 18, the ouput of the analog unit 14 to the display 20, thus reproducing the VHS tape in a conventional way ;
- connecting, thanks to the path switch 22, the ouput of the analog unit 14 to the input of the digital unit 16 and connecting, thanks to the monitor switch 18, the output of the digital unit 16 to the display 20, thus allowing the analog signal from the VHS tape to go through the digital unit 16 where full advantage of the digital circuits can be taken, as some examples will be given below.

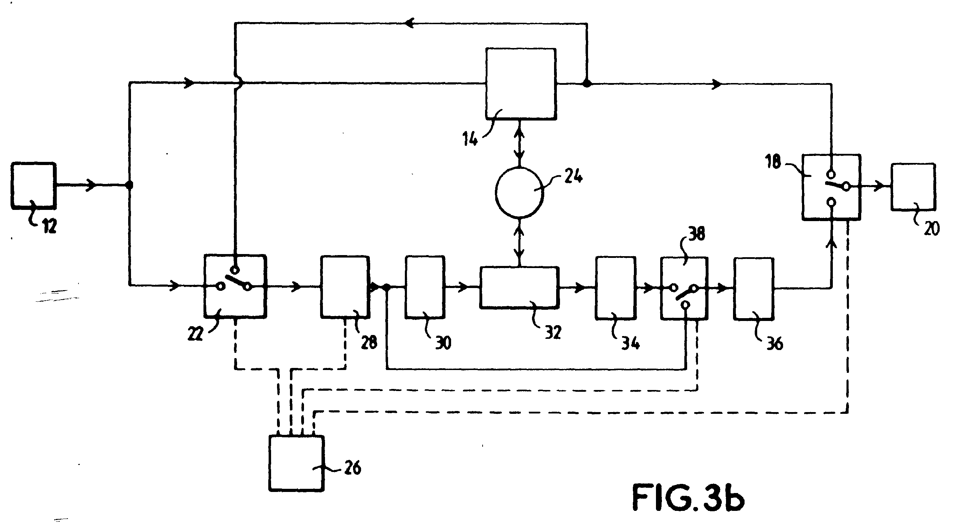

The choice (for instance through menus) is implemented by the micro-processor 26 (figure 3b) which stores the wishes of the user and controls the path switch 22 and the monitor switch 18 accordingly. An example of such process is described below.

The various parts of the digital unit 16 are represented in figure 3b. A drum unit 24 mainly comprising a drum carrying magnetic heads to record or reproduce a magnetic signal on the tape is connected via a bi-directional link to a bit-stream processor 32. The drum unit 24 and the bit-stream processor 32 together realise a medium interface. It can be noticed that the drum unit 24 is also linked to the analog unit 14 as this drum unit 24 is used for recording and reading signals according to both analog and digital standards.

The bit-stream processor 32 is a circuit which allows conversion of a compressed video signal composed of bytes according to the MPEG-II format into a bit stream and vice versa. It should be pointed out that in the figures the links between circuits are represented by a simple line for clarity, even when on the actual circuit they would consist of a plurality of wires, for instance to define a byte. Similarly, in the present application, a video signal can be composed of a plurality of electrical signals (like for a S-Video signal or a RGB-signal).

The digital unit 16 comprises a video decoder 28 receiving an analog signal from the path switch 22, which is either the analog signal from the analog source 12 or the analog signal from the output of the analog unit 14, as explained above. A suitable video decoder is the Philips SAA7114 IC. The video decoder 28 realises mainly analog-to-digital conversion and, when receiving a CVBS signal from the path switch 22, luminance/chrominance separation (thus obtaining Y, C signals). The video decoder 28 also realises separation of the two chrominance components U and V. The CVBS input signal can be of the NTSC-, of the PAL- or of the SECAM-type ; known video decoders, such as SAA7114, can cope with any of these norms.

The video decoder 28 outputs a digital stream, and more precisely a stream of 8-bit bytes in 4:2:2, that is 4 bytes for the luminance information (Y), 2 bytes for the first chrominance component (U) and 2 bytes for the second chrominance component (V).

The video decoder 28 comprises filters, some of which are used for the above-mentioned separations of signals (for instance a comb-filter for luminance/chrominance separation), other ones allowing video signal processing such as chroma saturation control or luminance contrast and brightness control. The filters are adaptive, which means that their parameters are controled by the micro-processor 26, through a serial I²C-bus (represented by a dotted line).

Another example of a video decoder with adaptive filters is given by U.S. patent No. 5 621 478.

The 4:2:2 output of the video decoder 28 is sent to a MPEG encoder 30 and to a digital switch 38 through a by-pass. The MPEG encoder 30 (MPEG II encoder more precisely) provides conversion of the 4:2:2 digital stream into a MPEG digital stream, which is then sent to the bit-stream processor 32. The corresponding bit-stream is then sent to the drum unit 24 to be recorded according to a digital standard on the tape.

The bit-stream processor 32 is also linked to a MPEG decoder 34 which converts back the MPEG II data stream from the bit-stream processor 32 corresponding to data read on the tape into a 4:2:2 digital stream. This 4:2:2 digital stream is then output to the digital switch 38.

The digital switch 38 allows to select which digital stream will be coded into an analog signal, i.e. which digital stream will be sent to a video encoder 36, whether the digital stream from the video decoder 28 or the digital stream from the MPEG decoder 34. The analog signal output from the video encoder 36 will be sent to the monitor switch 18 for possible display as described above.

The by-pass allows to connect directly the video decoder 28 to the video encoder 36 and therefore not to go through the MPEG encoder/decoder where information could be lost because of compression.

The digital unit 16 has 2 modes of operation :
- when reading a digitally recorded tape (D-VHS), the bit-stream will go through the bit-stream processor 32, the MPEG decoder 34 and the digital switch 38 is in a position where the signal is forwarded to the video encoder 36 ;
- when reading an analog tape (VHS), the user can choose as mentioned above to input the analog signal from the analog unit 14 to the video decoder 28 via the path switch 22 ; the digital switch 38 then allows direct connection of the 4:2:2 output of the video decoder 28 to the input of the video encoder 36 ; the output analog signal is transmitted to the display through correct positioning of the monitor switch 18 as already described above.

In the last mode, the analog VHS signal will then go through the high quality filters provided in the video decoder 28, thus leading to picture enhancement. Moreover, the filters can be easily programmed, for instance through menus where the user can select the main parameters of the filters, the micro-processor 26 sending the corresponding information to the video decoder 28.

The VCR according to this second embodiment can also be used as a multi-standard converter. In this mode of operation, the video signal received by the video decoder 28 is realised according to a given norm, among PAL, SECAM and NTSC. The 4:2:2 digital stream at the output of the video decoder 28 is independent of the type of norm used, as the Y, U and V signals are separated and as the norms (PAL, SECAM, NTSC) determine how Y, U and V signal are mixed together to get a CVBS signal.

The 4:2:2 digital stream is advantageously passed directly to the video encoder 36 (through correct positioning of digital switch 38). The video encoder can generate a video signal according to any of the norms (PAL, SECAM, NTSC), possibly different from said given norm. It is thus possible to convert the analog signal from the analog source 12 or from the analog unit 14 into a signal according to another norm. The converted signal can be output from the VCR to the display 20 or to a specific connector for use in another system.

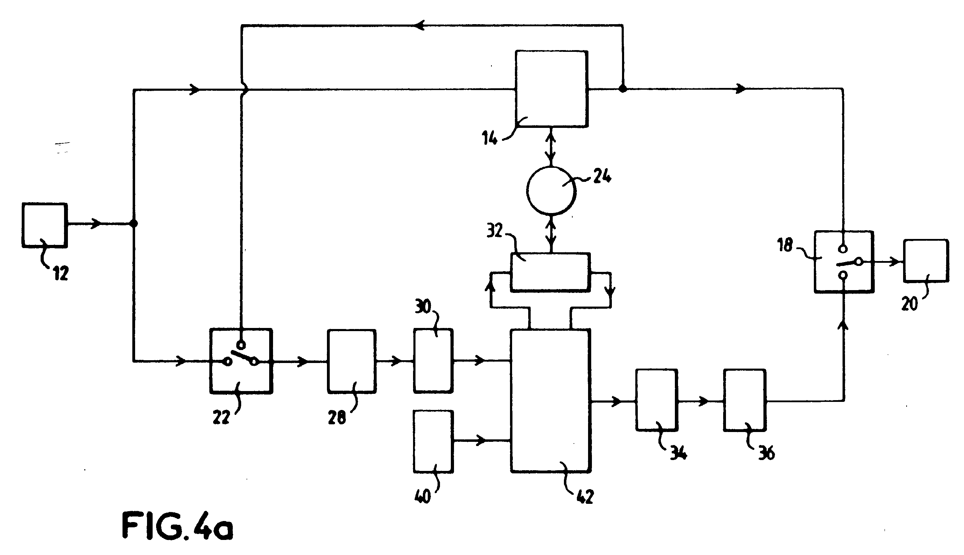

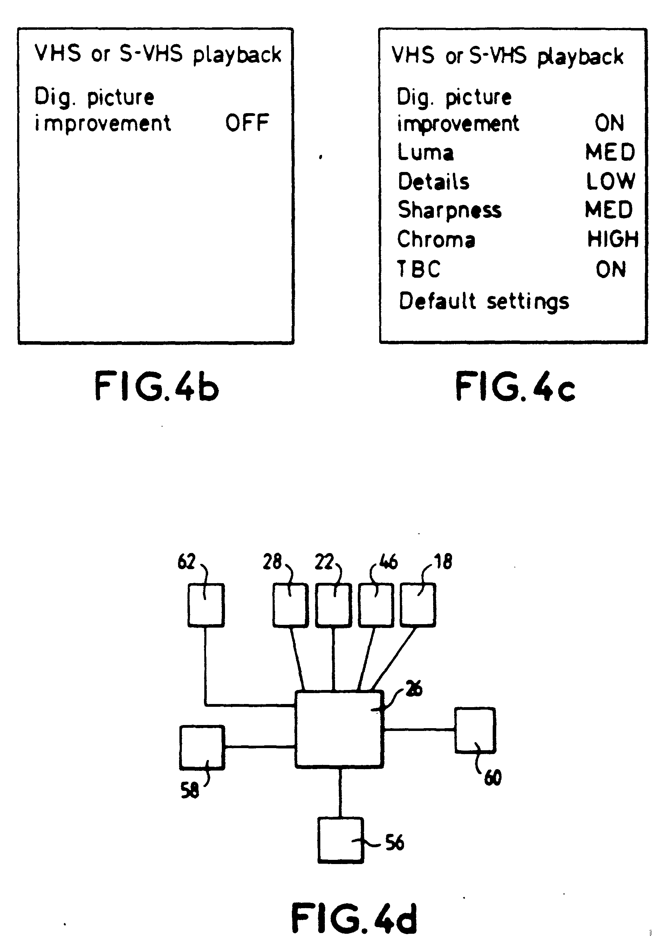

Figure 4a represents a variation of the second embodiment, which has the same general structure as disclosed in figure 3a, but which differs from figure 3b in its detailed implementation. However, the elements which are identical to those of figure 3b have the same numerical reference and will not be described once again.

As in figure 3a, a path switch 22 allows to connect the input of the digital unit 16 (and more precisely the input of the video decoder 28) selectively to the output of the analog source 12 or to the output of the analog unit 14.

The video decoder 28 is connected to the MPEG encoder 30 for transmission of the 4:2:2 digital stream, which is then converted by the MPEG encoder 30 into a first MPEG digital stream. The first MPEG digital stream is output from the MPEG encoder 30 to a multiplexer 42. The multiplexer 42 also receives a second MPEG digital stream from a digital tuner 40.

The multiplexer 42 is also connected to both the input and the output of the bit-stream processor 32. Alternatively, the connections between the multiplexer 42 and the bit-stream processor 32 could be implemented through a bi-directionnal link (as data processed in the bit-stream processor 32 can only go one way at a time, no simultaneous reading and recording on a tape being possible).

The multiplexer 42 has a separate output connected to the MPEG decoder 34 to convert a third MPEG digital stream, selected by multiplexer 42, into a 4:2:2 digital stream. The output of the MPEG decoder 34 is then connected to a video encoder in order to generate an analog video signal, which can be displayed, from the 4:2:2 digital stream.

As in the previous embodiment, the output of the video encoder 36 is connected to a monitor switch 18 to allow the display 20 to receive signal from the analog unit 14 or from the digital unit 16.

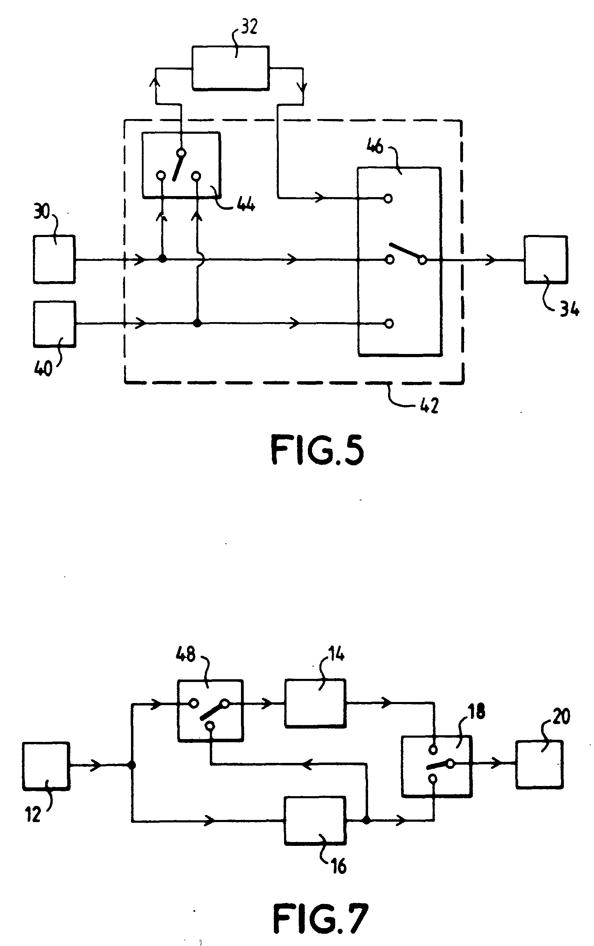

The multiplexer 42 allows to connect selectively the MPEG encoder 30 or the digital source 40 to the bit-stream processor 32 (for recording) and to connect selectively the bit-stream processor 32 or the MPEG encoder 30 or the digital source 40 to the MPEG decoder 34 (for display), as will be described now with more details with reference to figure 5.

The multiplexer 42 mainly comprises two switches : a first switch 44 and a second switch 46. The first switch 44 receives the first and the second MPEG digital streams and selects which of these two streams is sent to the bit-stream processor 32 in order to be recorded on the tape. The second switch 46 also receives the first and second MPEG digital streams, and in addition, the MPEG digital stream output from the bit-stream processor 32 (*i.e.* information read from the tape during playback). The second switch 46 selects which one of the MPEG digital stream it receives is sent to the MPEG decoder 34 as a third MPEG digital stream, which represents images to be displayed on the display 20.

The first and second switches 44, 46 are controlled by the micro-processor according to the wishes of the user. The multiplexer 42 not only allows to select which MPEG digital stream should be recorded or which MPEG digital stream should be displayed ; the multiplexer 42 also allows simultaneous recording of any of the first and second MPEG digital streams and displaying of the other one of the first and second digital streams.

The multiplexer 42 can thus directly connect the MPEG encoder 30 to the MPEG decoder 34, thanks to the second switch 46. This is particularly interesting when the path switch 22 is positioned so as to input the analog signal from the analog unit 14 to the video decoder 28 and the monitor switch 18 connects the display 20 to the video encoder 36. In this case, the analog signal read from a VHS tape follows the following path : path switch 22, video decoder 28, MPEG encoder 30, multiplexer 42, MPEG decoder 34, video encoder 36, monitor switch 18, display 20.

The following integrated circuits can be used :
- Philips SAA7114 as video decoder;
- NEC uPD61050 as MPEG II encoder;
- Philips SAA6700H as bit-stream processor;
- SGS - Thomson STI5500 as combined MPEG II decoder and video encoder.

In the various encoders and decoders, the video signal can be processed under the control of instructions coming from the micro-processor, notably for picture improvement. For instance, filtering and time base correction (TBC) can be realised, notably leading to a more stable picture. The video recorder can be used as a multi-standard converter according to this variation too. The conversion can notably take place during D-VHS recording and reproducing (play-back) ; some instructions can be sent from the micro-processor 26 to the MPEG encoder 30 and decoder 34 in this regard. For instance, a PAL signal from the analog source 12 can be decoded into a 4:2:2 digital stream in video decoder 28 and coded as a NTSC signal by the MPEG encoder 30 to be recorded as such in D-VHS.

Another example of such control of the VCR of figure 4a following the user instructions through menus will now be described with reference to figure 4b to 4d.

In a first period of time, the user enters his preferences regarding the operation of the VCR. The user activates a remote control which signals are received by a receiver 58 and forwarded to the micro-processor 26, which accordingly
(a) changes the menus to be displayed on display 20 through a conventional on-screen display (OSD) processor 60 or
(b) changes the value of an operation parameter in a memory 56.

To control the various possibilities of the circuit of figure 4a, the process is for instance the following :
- displaying an OSD menu proposing whether to use or not to use digital picture improvement (figures 4b and 4c) ;
- waiting for an instruction from the user, notably from the receiver 58 ;
- if the user instructs to use digital picture improvement, displaying an OSD menu proposing to choose preferences (figure 4c), as for instance, luminance, details, sharpness, chrominance, time base correction ;
- if the user instructs to change a preference, modifying the corresponding parameter in memory 56.

The OSD menu can also propose to the user to go back to default settings of the various preferences.

In a second period of time, the user activates playback (PB) of a video tape. The VCR will then reproduce the content of the tape according to the memorised preferences. This consists for the micro-processor 26 mainly in :
(c) reading parameters in the memory 56 ;
(d) controling the analog unit 14, the digital unit 16, the path switch 22 and the monitor switch 18 accordingly.

In controlling the circuit of figure 4a when a VHS tape is inserted and the play-back mode is launched (instruction from user on receiver 58 to micro-processor 26), the steps are :
- receiving an information on the type of tape from detection means 62;
- reading in the memory 56 the parameters corresponding to reproducing a tape of said type, for instance the parameters corresponding to VHS playback as previously entered ;
- if the parameters indicate digital picture improvement has not been selected, controlling the monitor switch 18 to connect the output of the analog unit 14 to the input of the display 20 ;
- if the parameters indicate digital picture improvement is selected, controlling the path switch 22 to connect the output of the analog unit 14 to the input of the video decoder 28, controlling the second switch 46 to connect the output of the MPEG encoder 30 to the input of the MPEG decoder 34, controlling the monitor switch 18 to connect the output of the video encoder 36 to the display 20 and sending instructions to the video decoder 28 according to the parameters.

The user can thus easily determine how he wants to benefit from the digital unit 16 even when using the analog unit 14 for reproduction.

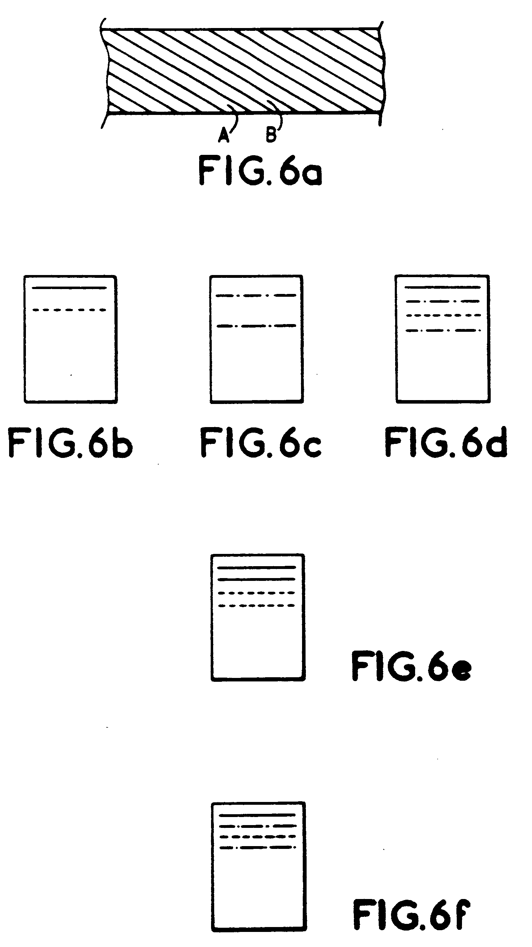

Another example of an advantage of such structure will now be described. According to the conventional VHS standard, the analog signal representing an image is recorded on the tape on slanted tracks, as represented on figure 6a. A first half of the lines of an image (i.e. 312 ½ lines for PAL/SECAM, and 262½ for NTSC) are recorded on a single track A ; figure 6b gives an example of the first two lines recorded on track A. The second half of the lines of the image are recorded on the following track B ; figure 6c gives an example of two such lines.

The lines from each track A,B are interlaced as represented schematically on figure 6d. As it is well known, though the images represented at figures 6b and 6c respectively are not displayed exactly at the same time, the retinal persistence of the user makes him see the image as represented on figure 6d.

When the user requests the video to pause (pause mode), the tape is stopped and the drum keeps reading the same track, for instance track A. The information of the previous or the following track is therefore not available because conventional analog units have no memory to store a part of the image ; at the opposite, the video signal which is read from the tape is directly sent to the display.

In a conventional VCR, the image wich is displayed during pause mode is therefore as represented on figure 6e, where the lines of track A are each displayed twice. The resolution is thus divided by two in pause mode.

In a VCR according to the invention, as represented on figure 4a, if the user chooses to let the analog signal read from a VHS tape go through the digital unit as previously described (digital picture improvement), the images with full resolution (*i*.*e*. information from both tracks A and B) are stored in the memory of the MPEG decoder 34. Thus, when the user requests pause mode, the micro-processor requests a still image to the MPEG decoder 34 ("freeze picture), which keeps on sending the image (schematically represented on figure 6f) with full resolution to the display 20 via the video encoder 36. In addition to having full resolution, vertical jitter is totally avoided.

Then, in a following step, the motion of the tape is stopped and the drum will keep reading the same track. It is important to notice that the image which is then continuously displayed is the last image which had been received by the MPEG decoder 34 before the pause button was pressed, thus with full resolution, though the analog unit keeps sending a half resolution image, because this half resolution image is ignored by the MPEG decoder 34 which is in "freeze" mode.

Alternatively, this can apply not only when the user selects digital picture improvement but also during conventional reproduction of a VHS or S-VHS tape (monitor switch 18 linking analog unit 14 to display 20).

According to this variation, during reproduction of a tape (normal speed), the path switch 22 connects the output of the analog unit 14 to the input of the video decoder 28 and, the second switch 46 connects directly the MPEG encoder 30 to the MPEG decoder 34 (so that the MPEG decoder 34 receives the video signal), but the monitor switch 18 connects the output of the analog unit 14 to the display 20 (as conventional reproduction of VHS or S-VHS is selected).

When the pause button is pressed, the micro-processor 26 will not only send a pause instruction ("freeze image") to the MPEG decoder 34, but also automatically switch the monitor switch 18 to connect the video encoder 36 to the display 20. Then, in a following step, the motion of the tape is stopped and the drum will keep reading the same track, as in the previous solution.

It is thus taken advantage of the digital unit 16 even during analog reproduction of a tape from the analog unit 14.

It can be noted that a still image from the MPEG decoder 34 can also be obtained while watching the analog source 12 or the digital tuner 40 through the digital unit 16 (for analog source, path switch 22 linking analog source 12 to video decoder 28 ; in both cases, second switch 46 linking MPEG encoder 30 to MPEG decoder 34 and monitor switch linking video encoder 36 to display 20).

It should also be pointed out that the video encoder 36 can output video signals according to three well-known types : CVBS, S-Video and RGB. Thus, when reading a VHS tape, the analog unit 14 outputs a CVBS signal, but the display 20 can receive a S-Video or even a RGB signal (which quality is better) thanks to the passing of the video signal through the digital unit 16.

The teachings of the invention also apply when the analog unit 14 outputs a S-Video signal when reading a S-VHS tape. Instead of one wire for VHS (CVBS signal), the video signal in S-Video is coded on two wires (Y and C : luminance and chrominance). There is thus two path switches 22, one for luminance, one for chrominance.

In addition, these results do not depend on the norm of the tape used with regards to the norm of the drum unit 24. For instance, when reading a VHS tape recorded under NTSC norm with a drum dedicated to PAL/SECAM, the results with conventional solutions were correct during play-back (reproduction at normal speed), but some problems occurred when in pause mode. The invention also gets rid of such problems.

The digital picture improvement as described above has many advantages as it has been explained. However, it could happen during forward or backward search (reproducing with higher speed of the tape than recorded, in same or opposite direction) that passing the analog signal from the analog unit 14 through the digital unit 16 generates digital artefacts, notably macroblocks could appear.

It is therefore proposed that the monitor switch 18 automatically connects the output of the analog unit 14 to the display 20 during forward search and during backward search, that is when a search signal is received by the micro-processor via the receiver 58.

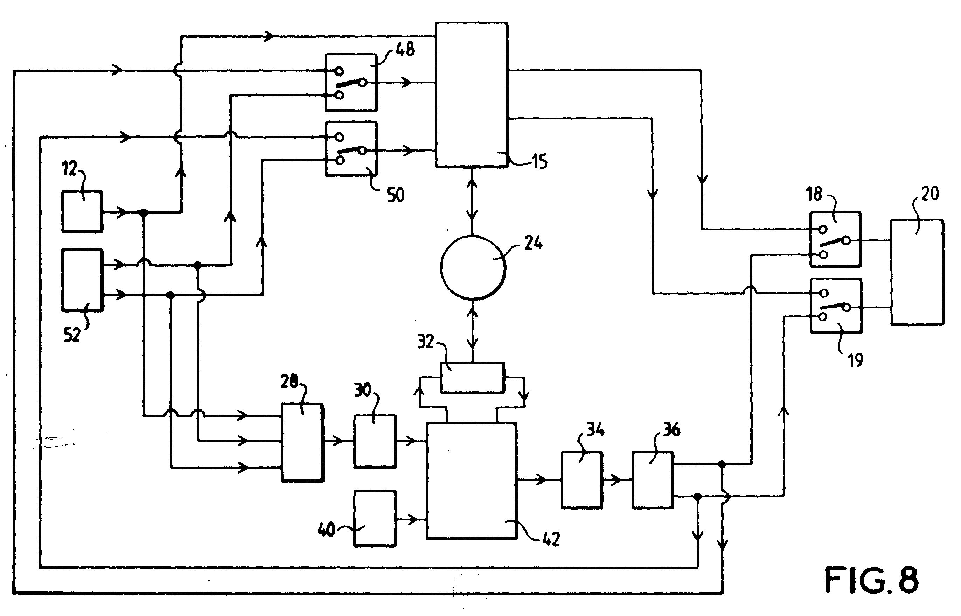

A third embodiment of the invention is represented at figure 7. In this embodiment, the analog signal from an analog source 12 is transmitted to a digital unit 16 and to a first input of a path switch 48, for possible connection to an analog unit 14. The output of the analog unit 14 and the output of the digital unit 16 can be selectively connected to a display 20 thanks to a monitor switch 18.

The output of the digital unit 16 is also transmitted to a second input of the path switch 48. This allows, when the path switch 48 is in the corresponding poisition, an analog signal from the analog source 12 to go through the digital unit 16 before being recorded in the analog unit 14, for instance according to the VHS or S-VHS standard. The recording will therefore have a better quality thanks to signal processing realised in the digital unit 16, as already explained.

A specific application of the general structure of figure 7 will now be described with reference to figure 8.

The VCR which main elements are represented on figure 8 has a S-VHS analog unit 15 ; this means that the analog unit 15 is able to record in S-VHS format a S-Video signal, where the video signal is represented by two separate electric signals Y and C respectively for luminance and chrominance.

The S-VHS analog unit has therefore two inputs which are connectable to a S-Video source 52, for instance a S-Video connector, and one input connectable to a baseband CVBS signal source 12, for instance an analog tuner including a demodulator. (In a variant, the Y-line among the two S-video lines could be used for transmission of the CVBS signal when the S-Video mode is not used.) The CVBS signal contains the Y and C signals that are combined as a composite signal to save on bandwidth. It is thus allowed to record a CVBS signal according to the VHS standard or a S-Video signal according to the S-VHS standard.

The output of the analog source 12 is connected on the one hand to the corresponding input of the S-VHS analog unit and on the other hand to a CVBS input of a video decoder 28 of a digital unit.

The Y-line output from the S-Video connector 52 is forwarded on the one hand to a first path switch 48 (for possible connection to the S-VHS analog unit 15) and on the other hand to a Y-input of the video decoder 28.

The C-line output from the S-Video connector is forwarded to a second path switch 50 for possible connection to the chrominance signal input of the S-VHS analog unit and to the video decoder 28.

The Philips SAA7114 IC is a convenient video decoder for this purpose. In the video decoder 28, the S-Video signals (Y/C signals) are converted into a 4:2:2 digital stream ; this conversion mainly consists in analog to digital conversion and separation of the two chrominance components (conversion of the C-signal into U- and V-signals).

As seen in previous embodiments, the CVBS signal input to the video decoder 28 is also converted into a 4:2:2 digital stream.

The other elements of the digital unit (MPEG encoder 30, digital tuner 40, multiplexer 42, bit-stream processor 32, MPEG decoder 34, video encoder 36) are identical to those described in the second embodiment (figure 4a) and will therefore not be described once again.

As previously pointed out, the video encoder 36 outputs notably a S-Video signal which is represented on figure 8 by two lines. The S-VHS analog unit 15 can also output a S-Video signal, on two lines, when a S-VHS tape is reproduced. The Y-line out of the S-VHS analog unit 15 and the Y-line out of the video encoder 36 are input to a first monitor switch 18 for selection of the Y-signal to be sent to the display 20. The C-line out of the S-VHS analog unit 15 and the C-line out of the video encoder 36 are input to a second monitor switch 19 for selection of the C-signal to be sent to the display 20.

The S-VHS analog unit 15 can also output a CVBS signal (on a non-represented wire for clarity of the drawing).

The Y-line and the C-line output from the video encoder 36 are also connected respectively to the first path switch 48 and to the second path switch 50, for possible connection respectively to the Y-input and to the C-input of the S-VHS analog unit 15. It is thus possible to transmit the S-Video signal output from the digital unit to the input of the analog unit 15. This is used as described below.

The VCR can work according to various operation modes, which are dependent on the choice of the user (for instance through menus as explained above) and, possibly, on the detection means which determines which type of signal is recorded on the tape (see for instance European patent application No. 0 671 855). Depending on these parameters, the micro-processor of the VCR will then control the various switches and the analog and/or digital unit.

Some modes and their following main features are the following :
- recording a CVBS signal from the analog source 12 in VHS standard (choice by user) : the S-VHS analog unit 15 uses the signal received on its CVBS input;
- recording a S-Video signal from the S-Video connector 52 in S-VHS standard (choice by user) : the first path switch 48 connects the Y-output of the S-Video connector 52 to the Y-input of the S-VHS analog unit 15, and the second path switch 50 connects the C-output of the S-Video connector 52 to the C-input of the S-VHS analog unit 15 ;
- recording a CVBS signal from the analog source 12 in D-VHS standard (choice by user) : the digital unit is selected to record the CVBS signal from the analog source 12 through the video decoder 28, the MPEG encoder 30 and the bit-stream processor 32 ;
- recording a S-Video signal from the S-Video connector 52 in D-VHS standard (choice by user) : the video decoder 28 uses the video signal received on its Y- and C-inputs ;
- reproducing S-VHS tape (the user chooses to reproduce a tape and the detection means determines the type of tape) : the first and second monitor switches 18, 19 allow to input the Y/C signals from the S-VHS analog unit 15 to the Y- and C-inputs of the display 20 ;
- reproducing a D-VHS tape (the user chooses to reproduce a tape and the detection means detects a D-VHS tape) : the Y/C signals out of the video encoder 36 are sent to the display 20 by correct positioning of the first and second monitor switches 18, 19 ;
- recording a MPEG stream from the digital tuner 40 according to the S-VHS standard (choice by user) : the MPEG stream is transmitted to the MPEG decoder 34 thanks to the multiplexer 42 (particularly its switch 46), and then successively converted into a 4:2:2 digital stream by the MPEG decoder 34 and into a S-Video signal (Y/C signals) by the video encoder 36 ; the S-Video signal is then recorded in S-VHS by the S-VHS analog unit 15 thanks to a positioning of the first and second path switches 48, 50 so as to connect respectively the Y-output of the video encoder 36 to the Y-input of the S-VHS analog unit 15 and the C-output of the video encoder 36 to the C-input of the S-VHS analog unit 15 ;
- recording a CVBS signal from the analog source 12 according to the S-VHS standard (choice by the user) : the CVBS signal is converted into a 4:2:2 digital stream by the video decoder 28, notably through a digital comb filter integrated in the video decoder 28 which allows luminance/chrominance separation ; the 4:2:2 signal is then passed to the MPEG encoder 30, through the multiplexer 42 which is controlled so as to let the MPEG stream go directly to the MPEG decoder 34 (direct connection of the MPEG encoder 30 to the MPEG decoder 34 thanks to the second switch 46, see figure 5) ; the 4:2:2 digital stream out of the MPEG decoder 34 is then transmitted to the video encoder 36 which generates a S-Video signal on its Y-output and C-output, which is then forwarded to the Y-input and C-input of the S-VHS analog unit 15 thanks to correct positioning of first and second path switches 48, 50.

Through this last example, it can be seen that the S-VHS analog unit 15 does not need any comb filter and its cost can consequently be lowered. The digital comb filter which is part of the video decoder 28 of the digital unit 16 is used instead.

It should be noted that it is possible to use a third path switch interposed between the output of the analog source 12 and the CVBS input of the S-VHS analog unit 15 and to allow a CVBS output of the video encoder 36 to be forwarded to this third path switch. This solution allows to choose (for VHS recording) between direct connection of the CVBS analog source 12 to the S-VHS analog unit 15 or connection through the digital unit for picture improvement or conversion between NTSC, PAL, SECAM as previously explained (second embodiment). The third path switch has not been represented for clarity of figure 8.

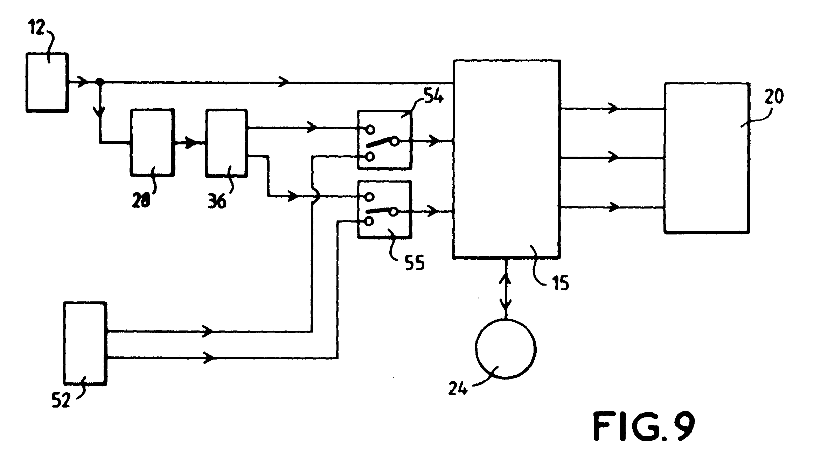

A fourth embodiment of the invention is represented at figure 9. According to the fourth embodiment, a Video Cassette Recorder (VCR) comprises a S-VHS analog unit 15 for recording on and reproducing from a magnetic tape through a drum unit 24.

The combination of the S-VHS analog unit 15 and drum unit 24 allows to record in VHS standard a baseband CVBS video signal received from an analog source 12 on a CVBS input of the S-VHS analog unit 15. Said combination is also able to perform recording of a S-Video signal received on Y- and C-inputs of the S-VHS analog unit 15 according to the S-VHS standard.

As previously mentioned, the CVBS baseband video signal from the analog source 12 is directed to the CVBS input of the S-VHS analog unit 15. In addition, the CVBS baseband video signal from the analog source 12 is transmitted to a CVBS input of a video decoder 28. On the basis of the CVBS baseband video signal, the video decoder 28 generates a 4:2:2 digital stream, notably through digitisation, luminance/chrominance (Y/C) separation by a digital comb filter and separation of the chrominance components U and V.

The 4:2:2 digital stream is then forwarded to a video encoder 36 which notably generates on its outputs a S-Video signal (thus a luminance signal on the Y-output and a chrominance signal on the C-output). The Y-output of the video encoder 36 is connected to an input of a luminance switch 54 which other input is connected to a Y-pin of a S-Video connector 52. Similarly, the C-output of the video decoder 36 is connected to an input of a chrominance switch 55 which other input is connected to a C-pin of the S-Video connector 52.

The outputs of the luminance switch 54 and chrominance switch 55 are respectively connected to the Y-input and to the C-input of the S-VHS analog unit 15. The luminance and chrominance switches 54, 55 thus allow to select which S-Video signal is used to be recorded according to the S-VHS standard among :
- the S-Video signal from the S-Video connector 52 ;
- the S-Video signal from the video encoder 36, generated on the basis of the CVBS signal of the analog source 12 through the video decoder 28.

The S-VHS analog unit 15 according to the invention thus comprises no analog comb filter for luminance/chrominance separation, so that it is less expensive than a conventional S-VHS processing unit with analog comb filter. The video encoder 28 and decoder 36 are standard ICs of reduced cost, so the cost of the system is reduced compared to conventional solutions with analog comb filter.

The scope of the invention is not limited to the previous embodiments. It is notably possible to combine the teachings of the second embodiment and the teachings of the third embodiment ; according to this solution, both the output of the digital unit and the output of the analog unit can respectively be connected to the input of the analog unit and to the input of the digital unit.

Another interesting solution is also to use the architecture of figure 3b without MPEG encoder, bit-stream processor and MPEG decoder in the fourth embodiment (figure 9). This would allow, by adding to figure 9 the switches as in figure 3b, to pass the video signal out of the S-VHS analog unit 15 through the video decoder and video encoder before display.

It should also be noted that the various solutions allow conversion between video standards (like NTSC, PAL and SECAM) as soon as the video signal is coded into a 4:2:2 digital stream (independently of the norm it was previously coded into), because the video encoder will then generate back a video signal according to any norm among NTSC, PAL and SECAM.

The above description refers to video signals but the same applies to audio signals which are attached to these video signals.

## Claims

1. Video apparatus comprising :
- a first circuit (112 ; 14 ; 12) generating a first baseband analog video signal on a first output;
- a second circuit (116 ; 28 ; 28, 30) at least connectable to the first output, for digitising the first baseband analog video signal and for processing and outputing a corresponding digital stream on a second output;
characterised in that
- the second output is at least connectable to a third circuit (122 ; 36 ; 34, 36) generating on a third output a second baseband analog video signal on the basis of the digital stream.

2. Video apparatus according to claim 1, wherein the first circuit is an analog recording and reproducing unit (14).

3. Video apparatus according to claim 2, wherein the second circuit and the third circuit are part of a digital recording and reproducing unit (16) and wherein a path switch (22) allows to connect selectively the second circuit to the analog recording and reproducing unit or to an analog source (12).

4. Video apparatus according to claim 3, wherein a digital switch (38) allows direct connection between the second circuit (28) and the third circuit (36).

5. Video apparatus according to claim 4, wherein the second circuit is a video decoder (28) and wherein the third circuit is a video encoder (36).

6. Video apparatus according to claim 4, wherein the second circuit is a video decoder (28) in series with a MPEG encoder (30) and wherein the third circuit is a MPEG decoder (34) in series with a video encoder (36).

7. Video apparatus according to claim 1, wherein the third output is connectable to an input of an analog recording and reproducing unit (14).

8. Video apparatus according to claim 7, wherein the second circuit and the third circuit are part of a digital recording and reproducing unit (16) and wherein a path switch (48) selectively connects the third output or the first output to the input of the analog recording and reproducing unit (14).

9. Video apparatus according to claim 8, wherein a switch (46) allows direct connection of the second circuit to the third circuit.

10. Video apparatus according to any of claims 7 to 9, wherein the first analog video signal is a CVBS signal, wherein the third analog video signal is a S-Video signal and wherein the analog recording and reproducing unit is a S-VHS analog unit.

11. Video apparatus according to claim 10, wherein a first path switch (48) and a second path switch (50) selectively connect the third output or a S-Video connector to the input of the S-VHS analog unit.

12. Video apparatus according to claim 1, wherein a multiplexer (118 ; 42) is interposed between the second circuit and the third circuit to allow direct connection between the second circuit and the third circuit.

13. Video apparatus according to claim 12, wherein the multiplexer is connected to a digital source (114 ; 40) and to a medium interface (120 ; 32, 24) and allows to connect independently the third circuit and the medium interface to the second circuit and the digital source.

14. Video apparatus according to claim 13, wherein the multiplexer comprises :
- a first switch (130, 44) with an input connected to the second circuit, an input connected to the digital source and an output connected to the medium interface and
- a second switch (132, 46) with an input connected to the second circuit, an input connected to the digital source, an input connected to the medium interface and an output connected to the third circuit.

15. Video apparatus according to claim 14, wherein an input of the first switch and an input of the second switch is connected to a digital video source (134) via a transcoder (136).

16. Process for the reproduction in a video apparatus according to claim 3 of a video signal recorded on a tape according to an analog standard, including the step of processing the video signal through the digital unit (16).

17. Process for recording a video signal on a tape according to an analog standard in a video apparatus according to claim 8, including the step of processing the video signal through the digital unit (16).

18. Process according to claim 16 or 17, further including the step of reading signal processing parameters in a memory (56) of the video apparatus which content can be changed by the user.

19. Process for controlling a micro-processor (26) of a video apparatus according to claim 1, wherein the first baseband analog video signal is realised according to a first norm, comprising the steps of:
- instructing said third circuit to generate the second baseband analog video signal according to a second norm which is different from said first norm.

20. Process for controlling a micro-processor of a video apparatus according to claim 1, comprising the steps of:
- instructing an on-screen display processor (60) to display a menu ;
- waiting for an information from the user;
- storing said information in a memory (56) ;
- transmitting said information to the second circuit or to the third circuit as a parameter for signal processing.

21. Process for controlling a micro-processor of a video apparatus according to claim 3 or 8, comprising the steps of:
- instructing an on-screen display processor (60) to display a menu ;
- waiting for an information from the user;
- storing said information in a memory (56);
- controlling the path switch (22, 48) depending on said information.

22. A video cassette recorder with :
- an analog recording and reproducing unit (14) having an output for a first baseband analog video signal;
- a digital recording and reproducing unit (16) having an input for a second baseband analog video signal and digital processing means (28, 30, 34, 36) generating on an output of said digital unit (16) a third baseband analog video signal;
characterised by
- a path switch (22) allowing connection of the output of the analog unit (14) to the input of the digital unit (16).

23. Process for controlling a video cassette recorder according to claim 22 including the step of:
- instructing the digital processing means (36 ; 34) to generate a still picture.

24. Process for controlling a video cassette recorder according to claim 22, wherein the video cassette recorder comprises a drum unit (24) notably able to drive a tape into motion, including the successive steps of:
- instructing the digital processing means (36 ; 34) to generate a still picture ;
- instructing the drum unit (24) to stop the tape motion.

25. Process according to claim 23, wherein the video cassette recorder comprises a micro-processor (26), wherein the step of instructing the digital processing means (36 ; 34) to generate a still picture takes place immediately when a pause signal is received by the micro-processor (26).

26. Process according to claim 23, wherein the video cassette recorder comprises a micro-processor (26), wherein the digital processing means comprises a video encoder (36) and wherein the step of instructing the digital processing means to generate a still picture is realised by an instruction from the micro-processor (26) to the video encoder (36).

27. Process according to claim 23, wherein the video cassette recorder comprises a micro-processor (26), wherein the digital processing means comprises a MPEG decoder (34) and wherein the step of instructing the digital processing means to generate a still picture is realised by an instruction from the micro-processor (26) to the MPEG decoder (34).

28. Process for controlling a video cassette recorder according to claim 22, wherein the video cassette recorder further comprises a monitor switch (18) to selectively connect the output of the analog unit (14) or the output of the digital unit (16) to an output of the monitor switch (18) connectable to a display (20), including the step of:
- instructing the monitor switch (18) to connect the output of the digital unit (16) to the output of the monitor switch (18) when a pause signal is received by the micro-processor (26).

29. Process for controlling a video cassette recorder according to claim 22, wherein the video cassette recorder further comprises a micro-processor (26) and a monitor switch (18) to selectively connect the output of the analog unit (14) or the output of the digital unit (16) to an output of the monitor switch (18) connectable to a display (20), including the step of:
- instructing the monitor switch (18) to connect the output of the analog unit (14) to the output of the monitor switch (18) when a search signal is received by the micro-processor (26).
